# EUROPEAN PATENT APPLICATION

(11) **EP 4 474 791 A2**
(43) Date of publication of application: **11.12.2024**
(21) Application number: 24181177.7
(22) Date of filing: 10.06.2024
(51) Int. Cl.: G01M 15/14

(54) **MULTI INSTRUMENT EGRESS FOR GAS TURBINE ENGINE**

(30) Priority: 08.06.2023 US 202318331699
(71) Applicant: RTX Corporation, Farmington, CT 06032 (US)
(72) Inventor: OVEREND, Denver B., Farmington, 06032 (US)
(74) Representative: Dehns

(57) **Abstract**

A test assembly includes multiple instrumentation egresses (72) disposed throughout the test assembly. Multiple sensors (70) are disposed through the test assembly. The number of sensors in the multiple sensors (70) exceeds the number of instrumentation egresses in the plurality of instrumentation egresses (72) and at least one pair of sensors in the plurality of sensors (70) shares a single instrumentation egress (72).

## Description

### INTRODUCTION

The subject disclosure relates generally to gas turbine engine test builds, and more specifically to a system for incorporating a larger number of monitoring instruments than available instrumentation egresses within a test gas turbine engine.

Gas turbine engines, such as those included in commercial aircraft and military aircraft, are subjected to extensive testing and analysis prior to being incorporated into a final aircraft design. Included within the tests are tests that measure operational parameters of a completed engine. In order to observe these parameters, test engines include sensors (referred to generally as instrumentation) within the test engine, and output leads of the instrumentation are routed through natural egresses in the engine construction and/or specific instrumentation egresses designed to allow instrumentation leads to pass out of the engine. The instrumentation leads are connected to a computer system that receives and interprets the instrumentation signals.

Due to the fully constructed nature of test engines, the number of available instrumentation egresses in any given construction is limited. For existing test operations, the number of sensors able to be incorporated within the engine is limited with the upper bound being the number of available egresses.

### SUMMARY

In one exemplary embodiment a test assembly includes a plurality of instrumentation egresses disposed throughout the test assembly, a plurality of sensors disposed through the test assembly, wherein the number of sensors in the plurality of sensors exceeds the number of instrumentation egresses in the plurality of instrumentation egresses, and at least one pair of sensors in the plurality of sensors sharing a single instrumentation egress.

In a further embodiment of the previous embodiment, a positive output terminal of a first sensor in the at least one pair of sensors and a negative output terminal of a second sensor in the at least one pair of sensors are connected to a flow circuit, and an output of the flow circuit is passed through a single corresponding instrumentation egress to a controller, the flow circuit being configured to pass a single sensor value at a time.

In a further embodiment of any of the previous embodiments, the flow circuit is disposed within the core.

In a further embodiment of any of the previous embodiments, the output of the flow circuit is connected to the controller via a polarity switch, the polarity switch being configured to toggle a polarity of the pair of sensors between a first polarity and a second polarity.

In a further embodiment of any of the previous embodiments, the flow circuit comprises at least a first diode connected to the first sensor in the pair of sensors, and a second diode connected to the second sensor in the pair of sensors.

In a further embodiment of any of the previous embodiments, a cathode of the first diode is connected to an anode of the second diode at a node, and wherein the node is connected to the flow circuit output.

In a further embodiment of any of the previous embodiments, the flow circuit is configured to allow a current from the first sensor to pass while connected in the first polarity and to allow a current from the second circuit to pass while connected in the second polarity.

In a further embodiment of any of the previous embodiments, each sensor in the at least one pair of sensors is a shared type of sensor.

In a further embodiment of any of the previous embodiments, each sensor in the at least one pair of sensors is a strain gauge.

In a further embodiment of any of the previous embodiments, each sensor in the pair of sensors provides a single current output.

In another exemplary embodiment a method for providing multiple sensor outputs through a single instrumentation egress of a test assembly engine includes: providing a first output of a first sensor and a second output of a second sensor to a flow circuit within a test assembly, providing an output of the flow circuit to a polarity switch, and providing the first output of the first sensor to a controller by operating the polarity switch in a first polarity and providing the second output of the second sensor to the controller by operating the polarity switch box in a second polarity.

In a further embodiment of any of the previous embodiments, the polarity switch is disposed exterior to the test assembly.

In a further embodiment of any of the previous embodiments, providing the output of the flow circuit to the polarity switch comprises passing a lead through a single instrumentation egress.

In a further embodiment of any of the previous embodiments, the flow circuit comprises at least a first diode connected to the first sensor and a second diode connected to the second sensor.

In a further embodiment of any of the previous embodiments, a cathode of the first diode is connected to an anode of the second diode at a node, and wherein the node is connected to the flow circuit output.

In a further embodiment of any of the previous embodiments, the method further includes operating a test assembly test, and alternating a polarity of the switch box at least once during the text.

In a further embodiment of any of the previous embodiments, alternating the polarity of the switch box at least once during the test comprises alternating the polarity of the switch box according to a predetermined duty cycle.

In a further embodiment of any of the previous embodiments, the polarity of the switch box is actively controlled.

In a further embodiment of any of the previous embodiments, wherein the test assembly is a test gas turbine engine.

In another exemplary embodiment a multi sensor instrumentation lead structure includes: a flow circuit have a first input configured to receive a positive output signal of a first sensor, a second input configured to receive a negative output circuit of a second sensor, and an output configured to output a single sensor signal from the input to a controller through a polarity switch box, the polarity switch box being configured to reverse a polarity of a connection to the controller, and wherein the polarity switch box is configured to be controlled by the controller, and wherein the flow circuit comprises at least a first diode and a second diode, a cathode of the first diode being configured to be connected to an anode of the second diode at a node, and wherein the node is connected to the flow circuit output.

The above features and advantages, and other features and advantages of the disclosure are readily apparent from the following detailed description when taken in connection with the accompanying drawings.

### BRIEF DESCRIPTION OF THE DRAWINGS

Other features, advantages and details appear, by way of example only, in the following detailed description, the detailed description referring to the drawings in which:
FIG. 1 is a highly schematic view of a gas turbine engine test structure.
FIG. 2 is a schematic representation of a multi-instrument single egress circuit.

### DETAILED DESCRIPTION

The following description is merely exemplary in nature and is not intended to limit the present disclosure, its application or uses. It should be understood that throughout the drawings, corresponding reference numerals indicate like or corresponding parts and features.

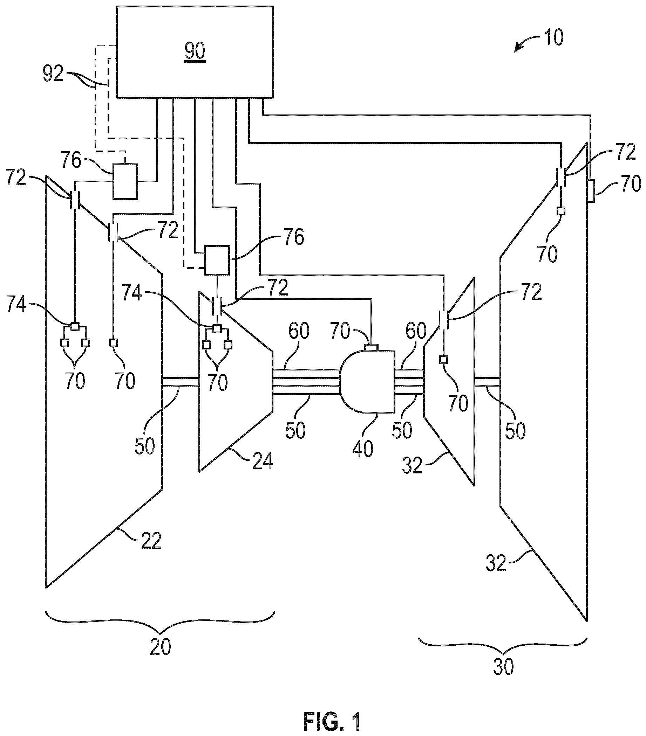

FIG. 1 provides a highly schematic view of a test gas turbine engine 10. The test gas turbine engine 10 includes a compressor section 20 having a low pressure compressor 22 and a high pressure compressor 24 arranged in series. The compressor section increases a pressure of a gas ingested in the primary flow path at the inlet of the low pressure compressor 22. The compressed gasses are output to a combustor section 40, where the gasses are mixed with a fuel and ignited. The combustion products are passed along the primary flow path from the combustor 40 to a turbine section 30 including a high pressure turbine 34 and a low pressure turbine 32. Expansion of the combustion gasses across the turbine section 30 drives the turbines 32, 34 to rotate. The combined systems, and the structure surrounding them are referred to as an engine core.

The low pressure compressor 22 and the low pressure turbine 32 are connected via a first shaft 50, and the high pressure compressor 24 is connected to the high pressure turbine 34 via a second shaft 60. The shafts 50, 60 couple the rotation of the turbines 32, 34 with the corresponding compressors 22, 24, such that rotation of the turbines 32, 34 drives rotation of the compressors 22, 24.

Test engines, such as the test gas turbine engine 10, also include multiple sensors 70, each of which measures an internal parameter of the engine 10 and provides a corresponding output measurement to a controller 90 positioned outside of the gas turbine engine 10. In cases where the sensors 70 are positioned interior to components (e.g., interior to a compressor 22, 24 or a turbine 32, 34) egresses 72 are provided to allow a pathway for the instrumentation leads to connect the sensors 70 to the controller 90. In many cases, a single instrumentation egress is only able to provide egress for leads for a single sensor 70. While illustrated in Figure 1 as a single line, it is appreciated that instrumentation leads for a single sensor passing through an egress 72 can include multiple physical wires, including a positive and a negative wire. The sensors 70 can include strain gauges, pressure sensors, flow sensors, rotations per minute (RPM) and speed sensors, accelerometers, temperature sensors, as well as any other sensor type that may be required for a particular engine test.

The illustrated positioning of the sensors 70 and the egresses 72 are included for explanatory effect only, and the sensors 70, and egresses 72, in a practical implementation may be included in any position on the gas turbine engine 10 as needed. Due to practicality of construction and assembly, and a need to test the fully structured gas turbine engine 10, the number, size, and locations of available instrumentation egresses 72 is limited. Additionally, in some instances construction of the test engine 10 can result in obstructions to one or more egresses 72, further reducing the number of available pathways through which instrumentation leads can be routed.

In the illustrated example, multiple locations include pairs of sensors 70 routed through a corresponding flow circuit 74. The flow circuit 74 allows an output of one attached sensor 70 to pass when the output is connected to the controller 90 in a first polarity and allows the other connected sensor 70 to pass when the output is connected to the controller 90 in a second polarity. In one example, strain gauges are particularly suited to be combined using the flow circuit 74. Using the flow circuits 74 allows for more sensors 70 to be included than available egresses 72.

Each output from a flow circuit 74 is connected to the controller 90 through a corresponding polarity switch 76. The polarity switch 76 controls the polarity of the connection to the controller 90, and operation of the polarity switch 76 is determined by a control signal 92 output from the controller 90. In practice, the polarity is switched by reversing the positive/negative lead connections to the controller 90 either by physically switching a connection, altering an electrical state of switches (e.g., transistors) within the controller 90 or the polarity switch 76, or any other means of reversing the current flow through the leads. This allows for the number of outputs to be increased without requiring the number of input channels to the controller 90 to be increased, and allows the number of sensors to exceed the number of egresses.

By using the flow box 74 and the polarity switch 76, pieces of instrumentation that would otherwise be unable to be included due to the limited number of egresses 72 or would be cut off due to an obstruction to an egress 72 route during construction, can be included. Further, in some examples, the number of required egresses can be reduced without reducing the amount of instrumentation provided for the test.

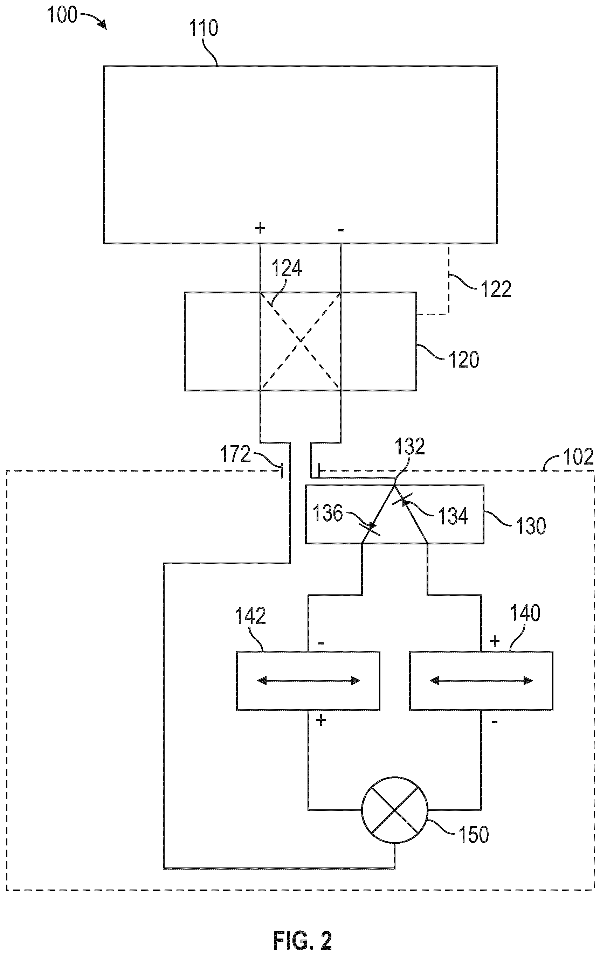

With continued reference to Figure 1, Figure 2 schematically illustrates a multi-instrument single egress circuit 100 including a controller 110, a polarity switch 120, a flow circuit 130 and two sensors 140, 142, such as strain gauges. Each sensor 140, 142 includes a positive output terminal and a negative output terminal. The output terminals provide a current path from a positive terminal of the controller 110 to a negative terminal of the controller 110, with the magnitude of current traveling along the path being indicative of the value being measured by the sensor 140, 142. In the illustrated example, the positive terminal of the first sensor 140 is connected to the flow combiner circuit 130, and the negative terminal of the second sensor 142 is connected to the flow combiner circuit 130. The negative terminal of the first sensor 140, and the positive terminal of the second sensor 142 are spliced together at a splicer 150.

The flow circuit 130 can be any circuit that is configured to allow current flow through the first sensor 140 while the leads are connected to the controller 110 in a positive polarity, and to allow current flow through the second sensor 142 while the leads are connected to the controller 110 in a negative polarity. As used herein, a "positive polarity" refers to the output of the flow circuit being connected to the negative terminal of the controller 110 and the output of the splicer 150 being connected to the positive terminal of the controller 110.

In one example, the flow circuit 130 comprises a pair of diodes 134, 136 with an anode of a first diode 134 connected to a positive terminal of the first sensor 140, a cathode of the first diode 134 and an anode of the second diode 136 being connected to the flow circuit output 132 and a cathode of the second diode 136 being connected to the negative terminal of the second sensor 142.

Each of the flow circuit 130, the sensors 140, 142, and the splicer 150 are contained within the engine 102. An output of the splicer 150 and the flow circuit 130 are routed through an egress 172 to a polarity switch 120. The polarity switch 120 includes a switching system 124. The switching system 124 is controlled via a control signal 122 from the controller 110 and is configured to switch the connections of the leads, thereby reversing the polarity and switching which sensor 140, 142 is providing a reading to the controller 110. In some examples, the switching system 24 can be a transistor network configured to electrically switch which lead is provided to which terminal of the controller 110. In alternative examples, the switching system 124 can include physical toggles, breakers, or any other type of switching system.

During operation of a test cycle, the controller 110 can measure first sensor 140 output, switch to the second sensor 142 output, and continue cycling between sensors at a predetermined duty cycle. Alternatively, the controller 110 can switch in response to a trigger condition, can measure one sensor for a first half of a test, and another sensor for a second half of a test, or any other operational combination.

Furthermore, while described herein within the context of a complete gas turbine engine test structure, it is appreciated that sub portions of a gas turbine engine may require similar testing. By way of example, a compressor section may require testing outside of a full assembly. As such, the specific structure or substructure being tested is referred to as a test assembly and can include a full gas turbine engine, a subcomponent of a gas turbine engine, or any other division as may be necessary for testing.

While the above disclosure has been described with reference to exemplary embodiments, it will be understood by those skilled in the art that various changes may be made and equivalents may be substituted for elements thereof without departing from its scope. In addition, many modifications may be made to adapt a particular situation or material to the teachings of the disclosure without departing from the essential scope thereof. Therefore, it is intended that the present disclosure not be limited to the particular embodiments disclosed, but will include all embodiments falling within the scope thereof.

## Claims

1. A test assembly comprising:
a plurality of instrumentation egresses (72; 172) disposed throughout the test assembly;
a plurality of sensors (70; 140, 142) disposed through the test assembly, wherein the number of sensors in the plurality of sensors (70; 140, 142) exceeds the number of instrumentation egresses in the plurality of instrumentation egresses (72; 172); and
at least one pair of sensors in the plurality of sensors (70; 140, 142) sharing a single instrumentation egress (72; 172).

2. The test assembly of claim 1, wherein a positive output terminal of a first sensor (140) in the at least one pair of sensors (70; 140, 142) and a negative output terminal of a second sensor (142) in the at least one pair of sensors (70; 140, 142) are connected to a flow circuit (74; 130), and an output of the flow circuit (74; 130) is passed through a single corresponding instrumentation egress (72; 172) to a controller (90; 110), the flow circuit (74; 130) being configured to pass a single sensor value at a time.

3. The test assembly of claim 2, wherein the flow circuit (74; 130) is disposed within the core.

4. The test assembly of claim 2 or 3, wherein the output of the flow circuit (74; 130) is connected to the controller (90; 110) via a polarity switch (76; 120), the polarity switch (76; 120) being configured to toggle a polarity of the pair of sensors (70; 140, 142) between a first polarity and a second polarity.

5. The test assembly of claim 4, wherein the flow circuit (74; 130) comprises at least a first diode (134) connected to the first sensor (140) in the pair of sensors (70; 140, 142), and a second diode (136) connected to the second sensor (142) in the pair of sensors (70; 140, 142).

6. The test assembly of claim 5, wherein a cathode of the first diode (134) is connected to an anode of the second diode (136) at a node, and wherein the node is connected to the flow circuit output (132).

7. The test assembly of claim 4, 5 or 6, wherein the flow circuit (74; 130) is configured to allow a current from the first sensor (140) to pass while connected in the first polarity and to allow a current from the second sensor (142) to pass while connected in the second polarity.

8. The test assembly of any preceding claim, wherein each sensor in the at least one pair of sensors (70; 140, 142) is a shared type of sensor,
wherein, optionally, each sensor in the at least one pair of sensors (70; 140, 142) is a strain gauge.

9. The test assembly of any preceding claim, wherein each sensor in the pair of sensors (70; 140, 142) provides a single current output.

10. A method for providing multiple sensor outputs through a single instrumentation egress (72; 172) of a test assembly engine comprising:
providing a first output of a first sensor (140) and a second output of a second sensor (142) to a flow circuit (74; 130) within a test assembly;
providing an output of the flow circuit (74; 130) to a polarity switch (76; 120); and
providing the first output of the first sensor (140) to a controller (90; 110) by operating the polarity switch (76; 120) in a first polarity and providing the second output of the second sensor (142) to the controller (90; 110) by operating the polarity switch box (76; 120) in a second polarity.

11. The method of claim 10, wherein:
the polarity switch (76; 120) is disposed exterior to the test assembly; and/or
providing the output of the flow circuit (74; 130) to the polarity switch (76; 120) comprises passing a lead through a single instrumentation egress (72; 172).

12. The method of claim 10 or 11, wherein the flow circuit (74; 130) comprises at least a first diode (134) connected to the first sensor (140) and a second diode (136) connected to the second sensor (142),
wherein, optionally, a cathode of the first diode (134) is connected to an anode of the second diode (136) at a node, and wherein the node is connected to the flow circuit output (132).

13. The method of claim 10, 11 or 12, further comprising operating a test assembly test, and alternating a polarity of the switch box (76; 120) at least once during the text,
wherein, optionally, alternating the polarity of the switch box (76; 120) at least once during the test comprises alternating the polarity of the switch box (76; 120) according to a predetermined duty cycle.

14. The method of any of claims 10 to 13, wherein:
the polarity of the switch box (76; 120) is actively controlled; and/or
the test assembly is a test gas turbine engine (10).

15. A multi sensor instrumentation lead structure comprising:
a flow circuit (74; 130) have a first input configured to receive a positive output signal of a first sensor (140), a second input configured to receive a negative output circuit of a second sensor (142), and an output configured to output a single sensor signal from the input to a controller (90; 110) through a polarity switch box (76; 120);
the polarity switch box (76; 120) being configured to reverse a polarity of a connection to the controller (90; 110); and
wherein the polarity switch box (76; 120) is configured to be controlled by the controller (90; 110); and
wherein the flow circuit (74; 130) comprises at least a first diode (134) and a second diode (136), a cathode of the first diode (134) being configured to be connected to an anode of the second diode (136) at a node, and wherein the node is connected to the flow circuit output.
